# EUROPÄISCHE PATENTSCHRIFT

(11) **EP 0 764 691 B1**
(45) Veröffentlichungstag und Bekanntmachung des Hinweises auf die Patenterteilung: **23.10.2002**
(21) Anmeldenummer: 96110295.1
(22) Anmeldetag: 26.06.1996
(51) Int. Cl.: C08L 63/00, C09D 163/00, C09J 163/00, C08G 59/68, C08G 59/18

(54) **Kettenverlängerte Epoxidharze enthaltende, vorwiegend kationisch härtende Masse**
Mainly cationically hardening composition containing advanced epoxy resins
Composition durcissant surtout cationiquement contenant des résines époxydes allongées

(30) Priorität: 19.09.1995 DE 19534668
(43) Veröffentlichungstag der Anmeldung: 26.03.1997
(73) Patentinhaber: DELO Industrieklebstoffe GmbH & Co. KG, 86899 Landsberg (DE)
(72) Erfinder: Eckhardt, Gunther, Dr., 82346 Frieding (DE); Somnitz, Ursula, 82362 Weilheim (DE); Lechner, Günther, Dr., 82237 Wörthsee (DE)
(74) Vertreter: Bunke, Holger, Dr.rer.nat. Dipl.-Chem.

(56) Entgegenhaltungen:
- EP-A- 0 467 258
- EP-A- 0 605 361
- FR-A- 2 352 859
- US-A- 3 576 903
- US-A- 4 318 766

## Beschreibung

Die Erfindung betrifft vorwiegend kationisch härtende Massen für das Verkleben, Vergießen, Abdichten und Beschichten. Insbesondere betrifft die Erfindung solche vorwiegend kationisch härtende Massen, die sich durch eine erhöhte Flexibilität auszeichnen und spezielle kettenverlängerte Epoxidharze enthalten.

Es ist bekannt, zur Herstellung von flexibel gestellten Epoxidharzmassen Verbindungen zu verwenden, die eine relativ hohe Molmasse besitzen und mit Epoxidgruppen terminiert sind. Die Molmasse und der molekulare Aufbau des Zwischenstückes bestimmen weitgehend die flexibilisierende Wirkung solcher Verbindungen.

Die Reaktivität dieser kettenverlängerten Epoxidharze hängt neben der Konzentration der Epoxidgruppen auch vom Charakter der entstehenden Epoxyverbindungen ab. Dabei ist eine Einteilung in aromatische kettenverlängerte Epoxidharze, cycloaliphatische verlängerte Epoxidharze und aliphatische verlängerte Epoxidharze zweckmäßig.

Der Einsatz dieser kettenverlängerten Epoxidharze kann in Epoxidmassen erfolgen, die nach sehr unterschiedlichen Mechanismen aushärten.

So können kettenverlängerte Epoxidharze in durch Polyaddition aushärtenden Systemen verwendet werden.

Der Einsatz in durch kationische Polymerisation aushärtenden Zubereitungen ist ebenfalls möglich, wobei die cycloaliphatischen kettenverlängerten Epoxidharze bevorzugt sind.

Dementsprechend ist bereits vorgeschlagen worden, kettenverlängerte Epoxidharze mit cycloaliphatischen Endgruppen herzustellen:

Aus DE-A-40 23 145 ist es bekannt, solche kettenverlängerten Epoxidharze aus cycloaliphatischen Diepoxiden und Polycarbonsäuren oder Polyaminen herzustellen. Dabei tritt jedoch durch Nebenreaktionen eine schwer kontrollierbare Kettenverlängerung ein, wobei relativ hochmolekulare Verbindungen gebildet werden, die die Viskosität der Gesamtzubereitung stark erhöhen können.

In der Schrift JP 59-030817 werden Addukte beschrieben, die durch Addition von Dicarbonsäure oder deren Anhydriden an OH-funktionalisierte Polycaprolactone sowie nachfolgende Addition von alicyclischen Epoxidharzen hergestellt werden. Die erste Stufe wird bei 100 bis 150°C und die zweite Stufe bei 100 bis 150°C ausgeführt. Die erhaltenen Addukte werden zusammen mit Härtern, wie beispielsweise Säureanhydriden, sowie mit Füllstoffen, Lösemitteln und Pigmenten eingesetzt und thermisch ausgehärtet. Dabei werden Addukte erhalten, die sich durch eine sehr hohe Viskosität auszeichnen, was den Einsatz der daraus gefertigten Massen einschränkt. Versucht man, die so hergestellten Addukte in kationisch härtenden Epoxidmassen einzusetzen, werden nach der Aushärtung nur wenig flexible und deutlich verfärbte Massen erhalten. Dieser Weg ist somit für die Übertragung auf vorwiegend kationisch härtende Massen nicht geeignet.

Aus EP-A2-0 467 258 ist eine kationisch härtende Masse, die kettenverlängerte Epoxidharze enthält, bekannt. Diese Masse besteht aus dem Produkt der Umsetzung eines carboxyfunktionellen Polyethers, z.B. Tetramethylenoxy-ethyloxypropyloxy-Copolymer, mit einem cycloaliphatischen Diepoxid (3,4-Epoxycyclohexylmethyl-3,4-epoxycyclohexancarboxylat), welches anschließend mit einem 20 Gew.-%igen Überschuß an cycloaliphatischem Epoxidharz versetzt wird. Diesem Gemisch wird noch ein Photoinitiator und eine Peroxoverbindung (Cumolhydroperoxid) unter Bildung einer homogenen flüssigen Klebstoffmasse zugesetzt.

In US-A-3 576 903 ist die Umsetzung einer Carbonsäure mit Maleinsäureanhydrid und einem Diepoxid zu Feststoffen beschrieben, welche anschließend beispielsweise zur Isolierung von Drähten verwendet werden können.

Es ist weiterhin seit langem bekannt, hydroxylgruppenhaltige organische Verbindungen in kationisch härtenden Epoxidharzzubereitungen zu verwenden:

So beschreibt beispielsweise die US-PS 4 256 828 eine photopolymerisierbare Zubereitung, die Epoxide, ein organisches Material mit Hydroxylfunktionalitäten und Photoinitiatoren enthält. Als hydroxyfunktionelle Materialien werden dabei genannt: Alkanole, Alkylenglykole, Polyoxyalkylenglykole, Polyoxyalkylentriole, hydroxylterminierte VinylacetatCopolymere, hydroxylterminierte Polyvinylacetalharze, hydroxylterminierte Polyester, hydroxylterminierte Polylactone und hydroxylterminierte Polyalkadiene.

In der US-PS 4 593 051 werden photopolymerisierbare Zubereitungen beschrieben, die Epoxidharze mit zwei oder mehr Epoxidgruppen, eine polymere organische Verbindung mit mehreren Aktivwasserstoffgruppen und einen Photoinitiator enthalten.

Diese polymere organische Verbindung mit Aktivwasserstoffgruppen stellt eine Polymer/Polyol-Dispersion dar, die erhalten wird durch radikalische Polymerisation von Acrylnitril oder Gemischen von Acrylnitril mit Styrol in einem organischen Polyol, wie beispielsweise Alkylenoxid-Addukten von Polyhydroxyalkanen.

Die US-PS 5 328 940 beschreibt eine strahlungshärtbare Zubereitung, die eine Epoxyverbindung, einen Photoinitiator und ein hydroxyfunktionelles Polyurethan mit Molmasssen von 300 bis 10.000 g/mol enthält, wobei das Verhältnis von Epoxygruppen zu Hydroxygruppen im Bereich von 1:1 zu 20:1 variieren kann.

Nachteilig bei den vorstehend beschriebenen Zubereitungen mit hydroxylhaltigen Verbindungen ist eine Verringerung der Aushärtegeschwindigkeit, insbesondere bei relativ niedrigen Aushärtetemperaturen, meist verbunden mit einem geringen Umsetzungsgrad und einer starken Neigung zur Nachvernetzung.

Der Erfindung liegt deshalb die Aufgabe zugrunde, vorwiegend kationisch härtende Massen vorzuschlagen, die kettenverlängerte Epoxidharze, aber möglichst keine unerwünschten, viskositätserhöhenden Nebenprodukte enthalten, und die ohne Reaktivitätsminderung in flexibilisierten Zubereitungen eingesetzt werden können.

Diese Aufgabe wird erfindungsgemäß gelöst durch eine vorwiegend kationisch härtende Masse, die kettenverlängerte Epoxidharze enthält und besteht aus
(A) 0,1 bis 95 Masseteilen von Produkten einer nur partiellen Umsetzung von Polyolen oder Polythiolen zuerst mit Maleinsäureanhydrid (1. Stufe) und dann mit Epoxyverbindungen (2. Stufe), die mehr als eine Epoxidgruppe im Molekül enthalten, wobei das Molverhältnis Hydroxylgruppen und/oder Thiolgruppen zu Maleinsäureanhydrid in der 1. Stufe 10:1 bis 1,05:1 und das Molverhältnis Carboxylgruppen : Epoxidgruppen in der 2. Stufe 2:1 bis 1:10 beträgt, die Reaktionstemperaturen in beiden Stufen 10 bis < 90°C betragen und die Umsetzungen der 1. und 2. Stufe in Anwesenheit von Katalysatoren erfolgen,
(B) 5 bis 95 Masseteilen von cycloaliphatischen Epoxidharzen,
(C) 0,1 bis 60 Masseteilen von Polyolen, ausgewählt aus der aus Polyesterpolyolen, Polyetherpolyolen, Polycarbonatpolyolen und Polybutadienpolyolen bestehenden Gruppe,
(D) 0,01 bis 5 Masseteilen von Lewis- und/oder Brönstedsäuren und/oder von Verbindungen, die durch Bestrahlung mit Licht einer Wellenlänge von 280 bis 600 nm Lewissäuren oder Brönstedsäuren bilden,
(E) 0 bis 5 Masseteilen von Peroxoverbindungen,
(F) 0 bis 45 Masseteilen von Verbindungen, die mindestens eine (Meth-)acrylatgruppe im Molekül besitzen,
(G) 0 bis 45 Masseteilen von Verbindungen, die mindestens eine (Meth-)acrylatgruppe und zusätzlich mindestens eine Hydroxylgruppe oder mindestens eine Epoxidgruppe im Molekül besitzen,
(H) 0 bis 5 Masseteilen von Verbindungen, die bei Bestrahlung mit Licht einer Wellenlänge von 280 bis 600 nm freie Radikale bilden,
(I) 0 bis 60 Masseteilen von Modifikatoren, ausgewählt aus der Gruppe der Füllstoffe, Farbstoffe, Stabilisatoren, Komplexbildner, Thixotropiermittel und Verdickungsmittel,
wobei die Summe aller Bestandteile 100 Masseteile beträgt.

Vorzugsweise besitzt die erfindungsgemäße Masse folgende Zusammensetzung:
- 5 bis 80 Masseteile der Komponente (A),
- 10 bis 70 Masseteile der Komponente (B),
- 5 bis 50 Masseteile der Komponente (C),
- 0,1 bis 4 Masseteile der Komponente (D),
- 0,001 bis 4 Masseteile der Komponente (E),
- 0 bis 45 Masseteile der Komponente (F),
- 0 bis 45 Masseteile der Komponente (G),
- 0 bis 5 Masseteile der Komponente (H),
- 0 bis 60 Masseteile der Komponente (I),
wobei die Summe aller Bestandteile 100 Masseteile beträgt.

Die Produkte der Komponente (A) sind kettenverlängerte Epoxidharze, die durch partielle Umsetzung in der Weise hergestellt werden, daß Polyole oder Polythiole in einer ersten Reaktionsstufe mit Maleinsäureanhydrid umgesetzt werden und in einer zweiten Reaktionsstufe die Umsetzung der dabei erzeugten Polycarbonsäure mit Epoxyverbindungen erfolgt, die mehr als eine Epoxidgruppe im Molekül besitzen, wobei das Molverhältnis Hydroxylgruppen und/oder Thiolgruppen zu Maleinsäureanhydrid in der ersten Reaktionsstufe 10:1 bis 1,05:1, vorzugsweise 6:1 bis 1,5:1, sowie das Molverhältnis Carboxylgruppen:Epoxidgruppen in der zweiten Reaktionsstufe 2:1 bis 1:10, vorzugsweise 1:1 bis 1:5, beträgt und die Reaktionstemperaturen in beiden Stufen 10 bis < 90°C betragen.

Die Umsetzungen der ersten und der zweiten Reaktionsstufe können sowohl katalysiert als auch unkatalysiert erfolgen, vorzugsweise werden jedoch Katalysatoren eingesetzt, wobei in der ersten und in der zweiten Reaktionsstufe unterschiedliche Katalysatoren zum Einsatz kommen können.

Als Katalysatoren sind die Oxide, Hydroxide und/oder Salze von Elementen der ersten und zweiten Hauptgruppe des Periodensystems der Elemente in Konzentrationen von 0,001 bis 10 Gew.-%, bezogen auf das jeweilige Reaktionsgemisch, geeignet. Typische Vertreter dieser Katalysatoren sind Kaliumhydroxid, Kaliumcarbonat, Kaliumacetat, Lithiumacetat, Lithiumcarbonat und Calciumoxid. Als Katalysatoren können auch tertiäre Amine und bzw. oder Phosphine eingesetzt werden. Die Verwendung von Ammonium- und/oder Phosphoniumverbindungen ist ebenfalls möglich.

Als Polyole oder Polythiole für die Herstellung der kettenverlängerten Epoxidharze werden Polyole oder Polythiole eingesetzt, die mindestens 2 OH- oder SH-Gruppen besitzen.

Die Verwendung von Prepolymeren, die 2 bis 4 primäre OH- bzw. SH-Gruppen besitzen, ist bevorzugt. So können als Prepolymere Polyetherpolyole, beispielsweise Polyetherdiole der allgemeinen Struktur 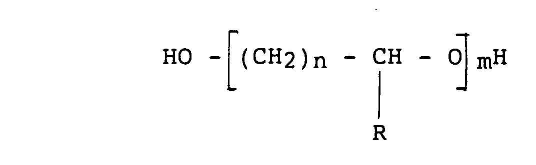 eingesetzt werden, wobei
n = eine ganze Zahl von 1 bis 5,
m = 1 - 200 und
R = H oder Alkyl
bedeuten.

Als geeignete Ausgangsprepolymere erwiesen sich gemischte Polyetherpolyole mit Butoxy- und Ethoxy- und/oder Propoxyeinheiten, die Molmassen von 1000 - 8000 g/mol besitzen. Weiterhin können als Ausgangsprepolymere zur Herstellung der kettenverlängerten Epoxidharze Polyesterpolyole, Polybutadiendiole, Polycarbonatdiole und Polysulfidpolythiole verwendet werden.

Die mit Vorteil einzusetzenden Polyesterpolyole können beispielsweise aus Polyolen mit mindestens 2 OH-Gruppen und Polycarbonsäuren mit mindestens 2 Carboxylgruppen hergestellt werden.

Typische Polyesterpolyole werden von der Firma Hüls unter dem Handelsnamen "Dynacoll ..." vertrieben.

Von besonderer Bedeutung sind Polyesterpolyole auf der Grundlage von Polymerisaten zyklischer Lactone wie beispielsweise Caprolacton. So können mit Vorteil zur Herstellung der kettenverlängerten Epoxidharze Polycaprolactondiole, Polycaprolactontriole und Blockcopolymere, bestehend aus Caprolacton- und Tetrahydrofuranblöcken, eingesetzt werden.

Die Verwendung von Polycarbonatpolyolen und insbesondere von Polycarbonatdiolen ist ebenfalls möglich.

Die Herstellung der kettenverlängerten Epoxidharze erfolgt beispielsweise in der Art, daß Prepolymere in einem geeigneten Reaktionsgefäß vorgelegt und gegebenenfalls aufgeschmolzen werden, der Katalysator und die vorgesehene Menge Maleinsäureanhydrid zugegeben werden und das Reaktionsgemisch mehrere Stunden bei Temperaturen von 30 bis 80°C gehalten wird.

Nach beendeter Reaktion der 1. Umsetzungsstufe, verfolgbar am Gesamtsäuregehalt des Reaktionsgemisches, wird ggfs. erneut ein Katalysator und das mindestens bifunktionelle Epoxidharz, beispielsweise ein Glycidylether von Bisphenolen oder Diolen oder ein cycloaliphatisches Diepoxidharz, wie es für die Komponente (B) eingesetzt wird (vgl. unten), zugegeben. Die Umsetzung der 2. Stufe erfolgt vorzugsweise bei Temperaturen von 20 bis 70°C innerhalb weniger Stunden. Der Umsetzungsgrad wird anhand der Epoxyäqivalentmasse oder des Säuregehaltes verfolgt.

Das Reaktionsgemisch kann ohne weitere Aufarbeitung in Epoxidharzsystemen, die durch Polyaddition aushärten, eingesetzt werden.

Für den Einsatz in kationisch härtenden Systemen kann eine Reinigung des Reaktionsgemisches zweckmäßig sein. Beispielsweise können durch eine mehrmalige Wasserwäsche Reste des Katalysators entfernt werden.

Der Einsatz der kettenverlängerten Epoxidharze kann aufgrund der drei Typen der funktionellen Gruppen, nämlich Epoxidgruppen, Doppelbindungen und sekundären OH-Gruppen in unterschiedlichen polymerbildenden Massen erfolgen.

So kann beispielsweise eine bevorzugt unter Polyaddition verlaufende Epoxidharzhärtung ggfs. im Gemisch mit niedrigmolekularen Epoxidharzen mit aminischen Härtern oder Anhydridhärtern ausgeführt werden. Auch unter der Einwirkung freier Radikale sind die kettenverlängerten Epoxidharze polymerisierbar. Sie sind auch als Hybridmonomer in Zubereitungen, die nach einem kationischen und nach einem radikalischen Mechanismus aushärten, einsetzbar.

Ein besonders interessantes Einsatzgebiet ist die Herstellung von vorwiegend kationisch härtenden, flexibilisierten Epoxidharzmassen.

Die nur partielle Umsetzung der OH-Gruppen der verwendeten Polyole und Polythiole ist besonders vorteilhaft, weil überraschenderweise die viskositätserhöhenden Nebenreaktionen stark zurückgedrängt werden können. Die kettenverlängerten Epoxidharze sind deshalb ohne Reaktivitätsminderung in flexibilisierten Massen einsetzbar.

Die Produkte der partiellen Umsetzung können im Gemisch mit nicht umgesetzten Polyolen oder Polythiolen oder als Gemisch von kettenverlängerten Epoxidharzen mit unterschiedlichem Umsetzungsgrad eingesetzt werden.

Die cycloaliphatischen Epoxidharze der Komponente (B) werden vorzugsweise ausgewählt aus der Gruppe (1) der Diepoxide cycloaliphatischer Ester der allgemeinen Struktur 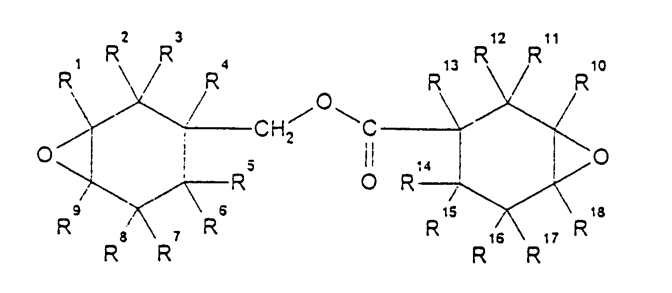 wobei die Substituenten R¹ bis R¹⁸ gleich oder verschieden sein können und unabhängig voneinander H, Alkyl oder Aryl bedeuten, (2) der Produkte der Umsetzung von epoxidierten Cyclohexanderivaten des Alkohol- und Säuretyps mit aliphatischen Dicarbonsäuren oder Diolen sowie (3) der cycloaliphatisch substituierten Dioxyspiroalkane.

Besonders bevorzugt eingesetzte cycloaliphatische Epoxidharze sind 3,4-Epoxycyclohexylmethyl-3',4'-epoxycyclohexylcarboxylat und 3-(3',4'-Epoxycyclohexyl)-8,9-epoxy-2,4-dioxyspiro(5.5)-undecan.

Diese und andere erfindungsgemäß einsetzbare cycloaliphatische Diepoxide sind beispielsweise in der EP-B-0 119 425 beschrieben, auf die hiermit vollinhaltlich Bezug genommen wird.

Bei einer bevorzugten Ausführungsform der Erfindung werden cycloaliphatische Epoxysilane und insbesondere 3,4-Epoxycyclohexylethyltrimethoxysilan in einem Massenverhältnis von 1:5 bis 1:300 und besonders bevorzugt 1:50 bis 1:200, bezogen auf die cycloaliphatischen Epoxidharze, eingesetzt. Diese Silane können in einer vollständig oder partiell hydrolysierten Form verwendet werden.

Als Polyole der Komponente (C) können Polyetherole mit Molmassen bis 8000 g/mol oder Polyesterpolyole eingesetzt werden, wie sie beispielsweise durch Polykondensation aus niedermolekularen Polyolen und Polycarbonsäuren bzw. deren Anhydriden hergestellt werden können.

Typische Vertreter dieser Polyesterpolyole werden von der Firma Hüls unter der Bezeichnung "Dynacoll ..." vertrieben. Bevorzugt werden zur Herstellung der erfindungsgemäßen Zubereitungen solche Polyesterpolyole verwendet, die Molmassen von 1000 bis 5000 g/mol und Hydroxyl-Äquivalentmassen von 500 - 2000 besitzen.

Mit besonderem Vorzug können Polycaprolactondiole und andere Polyesterpolyole eingesetzt werden, die durch katalysierte Reaktionen von Caprolacton mit unterschiedlichen Starteralkoholen zugänglich sind.

Typische Vertreter dieser Verbindungsklasse werden von der Firma UCC unter der Bezeichnung "Tone..." oder von der Firma Daicel unter der Bezeichnung "Placcel..." vertrieben.

Für die Herstellung der erfindungsgemäßen Massen werden als Komponente (C) bevorzugt Polycaprolactontriole mit Molmassen von 200 bis 1000 g/mol und Polycaprolactondiole mit Molmassen von 300 bis 2000 g/mol verwendet.

Die Verwendung von Polycarbonatpolyolen als Komponente (C) in den erfindungsgemäßen Massen ist ebenfalls vorteilhaft.

Bevorzugt werden Polycarbonatdiole mit Molmassen von 400 bis 2000 g/mol und der allgemeinen Struktur 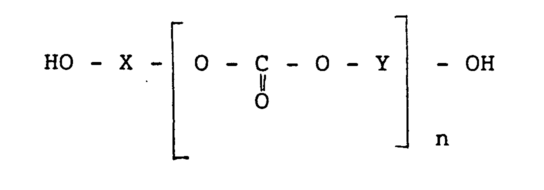 eingesetzt, wobei X und Y gleich oder verschieden sein können und unabhängig voneinander Alkylen, Arylen, Alkarylen, Aralkylen oder Polyoxyalkylen bedeuten und n Werte zwischen 1 und 50 annehmen kann.

Die als Komponente (C) verwendbaren Polybutadiendiole stellen Homopolymerisate des Butadiens dar, die mit OH-Gruppen terminiert sind, Molmassen von 1000 bis 5000 g/mol aufweisen und einen hohen Gehalt an Doppelbindungen mit einer von den Herstellungsbedingungen abhängigen Verteilung zwischen Transvinylen-, Cisvinylen- und Vinylgruppen besitzen. Typische Vertreter dieser Verbindungsklasse werden von der Firma Atochem unter der Bezeichnung "Poly bd..." vertrieben. Durch partielle Epoxidierung der Doppelbindungen und bevorzugt der Vinylengruppen sind Polybutadiendiole zugänglich, die mittelständige aliphatische Epoxygruppen und Epoxyäquivalentmassen von 200 bis 1000 und bevorzugt 250 bis 600 besitzen.

Diese epoxidierten Polybutadiendiole können mit Vorteil als Flexibilisierungsmittel in den erfindungsgemäßen Zubereitungen ggf. zusammen mit nicht epoxidierten Polybutadiendiolen eingesetzt werden.

Für die Einstellung des Eigenschaftsbildes kann es zweckmäßig sein, Polyole unterschiedlicher mittlerer Molmasse und unterschiedlicher Struktur für die Flexibilisierung einzusetzen; auf diese Weise können beispielsweise der Grad der Flexibilisierung, die Reaktivität, die Viskosität und das Anfließverhalten eingestellt werden.

Als Komponente (D) können Photoinitiatoren eingesetzt werden, die bei Bestrahlung mit Licht einer Wellenlänge von 280 bis 600 nm zerfallen und deren Zerfallsprodukte, ggfs. nach einer Reaktion mit einer anderen chemischen Verbindung, in der Lage sind, die kationische Polymerisation zu starten.

Diese Zerfallsprodukte sind in den meisten Fällen den Gruppen der Brönstedsäuren oder der Lewissäuren zuzuordnen. Typische Beispiele für Photoinitiatoren sind die komplexen Salze vom Onium- oder Metalloceniumtyp, wobei Diaryliodonium-, Triarylsulfonium- und Ferroceniumsalze bevorzugt sind.

Als Anionen dieser Salze sind komplexe Anionen geringer Nucleophilie bevorzugt, beispielsweise Tetrafluoroborat, Hexafluorophosphat, Hexafluoroarsenat und Hexafluoroantimonat.

So können als Photoinitiatoren beispielsweise Ferroceniumhexafluoroantimonate in einer Konzentration von 0,1 bis 2 Gew.-% und bevorzugt 0,4 bis 1,0 Gew.-% der Epoxidharzmasse verwendet werden.

Wenn die erfindungsgemäßen Massen in zwei Teilzubereitungen hergestellt und vor der Anwendung gemischt werden, können als Komponente (D) Lewis- oder Brönstedsäuren direkt verwendet werden.

Als Lewissäure kommt beispielsweise Bortrifluorid bzw. seine Anlagerungsprodukte, wie Etherate, in Betracht.

Geeignete Brönstedsäuren besitzen die allgemeine Struktur 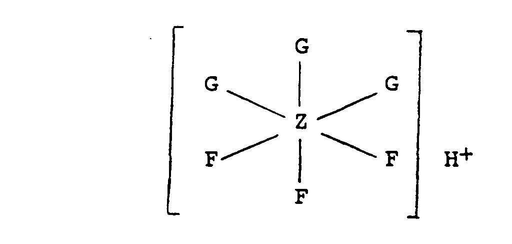 mit Z = P, As, Sb
F = Fluor
G = Fluor oder Hydroxyl-
oder 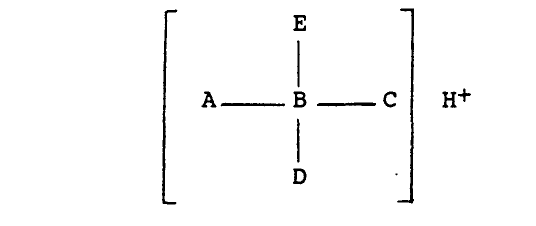 mit B = Bor, wobei
A, D, C, E gleich oder verschieden sein können und Aryl-, Perfluoroaryl-, Fluor-, O-Alkylen-OH, O-Alkylen-COOH bedeuten.

Als Komponente (E) können Peroxyverbindungen beispielsweise vom Typ der Perester, der Diacylperoxide, der Peroxydicarbonate und der Hydroperoxide als Beschleuniger eingesetzt werden. Bevorzugt werden Hydroperoxide verwendet. Als besonders bevorzugter Beschleuniger kommt Cumolhydroperoxid in etwa 70 - 90 %iger Lösung in Cumol zum Einsatz.

Für die Herstellung von Massen, die sowohl nach einem kationischen als auch nach einem radikalischen Mechanismus aushärten, können als Komponente (F) bis zu 45 Masseteile an (Meth-)acrylatmonomeren mit mindestens einer (Meth-)acrylatgruppe eingesetzt werden.

Geeignete (Meth-)acrylatmonomere sind die Ester der Acrylsäure oder der Methacrylsäure mit monofunktionellen bzw. multifunktionellen Alkoholen, die ggfs. alkoxyverlängert sein können.

So können beispielsweise die Ester von ethoxyverlängertem Trimethylolpropan oder Pentaerythrol mit Acrylsäure oder Methacrylsäure verwendet werden.

Mit Vorteil können in den erfindungsgemäßen Massen als Komponente (G) (Meth-)acrylatmonomere verwendet werden, die mindestens eine (Meth-)acrylatgruppe und mindestens eine OH-Gruppe enthalten.

Typische Beispiele für diese Verbindungsklasse sind
- Hydroxypropyl(meth-)acrylat
- Hydroxyethyl(meth-)acrylat
- Polycaprolactonmonomethacrylat
- Mono(meth-)acrylate ggfs. alkoxyverlängerter Alkylendiole
- Mono- oder Di(meth-)acrylate von Triolen oder höherfunktionellen Alkoholen.

Weiterhin können als Komponente (G) Verbindungen eingesetzt werden, die mindestens eine Epoxidgruppe und mindestens eine (Meth-)acrylatgruppe im Molekül enthalten.

Typische Beispiele dieser Verbindungsklasse sind
- Glycidyl(meth-)acrylat
- Umsetzungsprodukte von Diepoxidverbindungen mit (Meth-)acrylsäure.

Als Komponente (H) können die Massen typische Photoinitiatoren enthalten, die unter Einwirkung von UV-Licht oder von sichtbarem Licht unter Bildung freier Radikale zerfallen.

Die Photoinitiatoren können ausgewählt werden aus der Gruppe der Acetophenone, Benzophenone, Thioxanthone, Campherchinone und Mono- und Di-acylphosphinoxide.

Als Komponente (I) können weitere Modifikatoren in den erfindungsgemäßen Massen eingesetzt werden, nämlich Füllstoffe, wie beispielsweise Quarzmehl, Silikate oder Glasmehl, Farbstoffe und Pigmente, wie beispielsweise Sudanrot und Titanweiß, Stabilisatoren, wie beispielsweise gehinderte Phenole und gehinderte Amine, Phosphite und Thioether oder Triazine.

Der Zusatz von Komplexbildnern, wie beispielsweise Oxalsäure, 8-Hydroxychinolin, Ethylendiamintetraessigsäurederivaten und aromatischen Polyhydroxyverbindungen ist ebenfalls möglich. Die Massen können weiterhin Thixotropiermittel, wie ggfs. oberflächenmodifizierte feindisperse Kieselsäuren, und Verdickungsmittel, wie gelöste hochpolymere Verbindungen enthalten.

Die erfindungsgemäßen Massen können sowohl als einkomponentige Zubereitungen als auch in zwei Teilzubereitungen formuliert werden, wobei die eine Teilzubereitung die Komponenten (A), (B) und die andere Teilzubereitung die Komponenten (C), (D) enthält und die Gesamtmenge der Komponenten (E), (F), (G), (H) und (I) in einer der beiden Teilzubereitungen enthalten oder auf beide Teilzubereitungen verteilt ist, wobei die zweite Teilzubereitung durch Bestrahlung mit Licht einer Wellenlänge von 280 bis 600 nm aktiviert werden kann bzw. bei ausschießlicher Verwendung von Lewissäuren und/oder Brönstedsäuren diese Aktivierung nicht notwendig ist und die Polymerisation eintritt, wenn die beiden Teilzubereitungen in Kontakt gebracht werden.

Das Mischungsverhältnis der beiden Teilzubereitungen kann in weiten Grenzen variiert werden; vorzugsweise arbeitet man mit einem Mischungsverhältnis von 10:1 bis 1:10 und besonders bevorzugt von 4:1 bis 1:4.

Zur Erzielung einer schnelleren Oberflächenaushärtung kann die aufgetragene gemischte Masse mit Licht einer Wellenlänge von 280 bis 600 nm bestrahlt werden. Diese Verarbeitungsvariante der erfindungsgemäßen Massen ist beispielsweise beim Verguß größerer Teile, verbunden mit der Anwendung von erheblichen Volumina der Vergußmassen, von Vorteil.

Die Herstellung der erfindungsgemäßen Epoxidharzmassen kann in der dem Fachmann an sich bekannten Weise erfolgen.

Die erfindungsgemäßen Epoxidharzmassen werden vorzugsweise zum Verkleben, Vergießen, Abdichten und Beschichten von Substraten verwendet. Die Massen eignen sich besonders zum Verkleben von Metallen und elektronischen Bauteilen, zum Bestücken von Leiterplatten sowie als Gießharze in der Elektrotechnik und zum Vergießen elektronischer Bauelemente.

Die Erfindung wird anhand der folgenden Beispiele und Vergleichsbeispiele näher erläutert:

### Beispiele:

In einer Glasapparatur, ausgerüstet mit Zulauf, Feststoffeintrag, Be- und Entlüftung, Bodenabgang und einem Rührwerk, wird die cycloaliphatische Epoxidverbindung der Komponente (B) vorgelegt, unter ständigem Rühren die flüssigen Komponenten der Masse zugegeben, und anschließend die Feststoffe portionsweise eingebracht. Die Homogenisierung der Mischung erfolgt durch 30-minütiges Rühren. Die so erhaltene Masse wird mit den Photoinitiatoren (Komponente C) versetzt, und die Mischung durch Rühren eine Stunde lang nachhomogenisiert. Die Abfüllung erfolgt unter Lichtausschluß in lichtundurchlässige Behälter.

Die Tabelle 1 enthält die Herstellungsbedingungen für die kettenverlängerten Epoxidharze der Komponente (A) - (Beispiele 1-12).

Die Epoxidharze gemäß den Beispielen 1 bis 12 wurden mit Toluol verdünnt, mittels dreimaliger Wasserwäsche auf einen Alkaligehalt kleiner 50 ppm gebracht, und durch Abdestillieren des Toluol/Wasser-Gemisches getrocknet und für die Herstellung der erfindungsgemäßen flexibilisierten Massen eingesetzt.

Die Tabellen 2 und 4 enthalten Beispiele für Zusammensetzungen erfindungsgemäßer Massen, die kettenverlängerte Epoxidharze der Komponente (A) enthalten, wobei die Massen der Beispiele 13-20 (Tab. 2) keine (Meth)acrylate der Komponenten (F) und (G) enthalten und ausschließlich einem kationischen Härtungsmechanismus unterliegen, während die Massen der Beispiele 21-27 (Tab. 4) (Meth)acrylate der Komponenten (F) und (G) enthalten und einem kombinierten kationischradikalischen Härtungsmechanismus unterliegen.

In den Tabellen 3 und 5 sind die Ausprüfergebnisse für die Massen gemäß den Beispielen 13-27 zusammengestellt.

Für die Ausprüfung der Massen wurden folgende Methoden herangezogen:

### 1. Druckscherfestigkeit

Es wurden Glasprüfkörper der Abmessungen 20 x 20 x 5 mm verwendet. Die Masse wurde in einer Schicht von etwa 100 µm auf einen Prüfkörper aufgetragen, die beiden Glaskörper gefügt und die Verbindung mittels der Lampe Delolux 03 (Fa. Delo Industrieklebstoffe, Landsberg/Lech) eine Minute je Vorderund Rückseite belichtet. Nach der Belichtung wurde die Verbindung 24 Stunden bei Raumtemperatur gelagert. Die Prüfung der Druckscherfestigkeit erfolgte bei 23°C mit einem Zwick-Universal-Prüfgerät bei einer Deformationsgeschwindigkeit von 10 mm/Min.

### 2. Zugfestigkeit

An Zugfestigkeitsprüfkörpern der Abmessungen 25 x 6 x 2 mm (Schulterstäbchen; Meßstrecke: 10 x 2 x 2 mm) wurden die Zugfestigkeit und die Reißdehnung mittels der Zwick-Universal-Prüfmaschine mit einer Deformationsgeschwindigkeit von 10 mm/Min. bei 23°C bestimmt. Die Herstellung der Prüfkörper erfolgte durch Belichtung der in Formen eingegossenen Massen unter der Lampe Delolux 03 (je eine Minute Vorder- und Rückseite) und darauffolgende Lagerung über 24 Stunden bei Raumtemperatur.

### 3. Reißdehnung nach thermischer Nachhärtung

Zur Bestimmung des Effektes der thermischen Nachhärtung wurden die Zugfestigkeitsprüfkörper nach Belichtung und 24-stündiger Lagerung bei Raumtemperatur 100 Stunden bei 85°C im Umlufttrockenschrank nachgehärtet. Danach wurden, wie unter 2. beschrieben, die Zugfestigkeit und die Reißdehnung bei 23°C bestimmt.

Aus den Tabellen 3 und 5 geht hervor, daß unter Verwendung der kettenverlängerten Epoxidharze sowohl rein kationisch härtende als auch kationisch und radikalisch härtende Massen hergestellt werden können, die sich durch eine hohe bis sehr hohe Flexibilität, ausgedrückt durch die Bruchdehnungswerte, bei überraschend hoher Kohäsion der ausgehärteten Massen, ausgedrückt durch die Zugfestigkeitswerte, und eine hohe Reaktivität der Massen, ausgedrückt durch die Belichtungszeit einer Modellverklebung bis zum Erreichen der Hantierbarkeit, auszeichnen.

Aus dem Vergleich der Bruchdehnungswerte und der Zugfestigkeitswerte, die nach Lagerung unter unterschiedlichen Bedingungen bestimmt wurden, kann das relativ geringe Ausmaß einer thermischen Nachversprödung gezeigt werden. Die Massen unter Verwendung der kettenverlängerten Epoxidharze zeichnen sich durch gute Druckscherfestigkeitswerte von Verklebungen des schwierig zu verklebenden Kunststoffes Polycarbonat aus.

Die Verklebungen Aluminium/Polycarbonat, d.h. von Fügepartnern mit stark unterschiedlichem linearen Ausdehnungskoeffizienten, zeigen im Klimatest eine überraschend hohe Beständigkeit der Druckscherfestigkeit.

### Beispiele 28 und 29 und Vergleichsbeispiel

Es wurden Massen hergestellt, die jeweils
- (A) 45,1: Masseteile Flexibilisierungsmittel
- (B) 40,3: Masseteile 3,4-Epoxycyclohexylmethyl-3',4'epoxycyclohexylcarboxylat
- 1,0: Masseteile 3,4-Epoxycyclohexylethyltrimethoxysilan
- (C) 9,9: Masseteile Polycaprolactontriol (Molmasse 310)
- (D) 1,6: Masseteile 50%ige Lösung von Ferrocenium-Hexafluoroantimonat in Propylencarbonat
- (E) 2,1: Masseteile Cumolhydroperoxid
enthielten.

Die Flexibilisierungsmittel waren im Fall des Vergleichsbeispiels ein Polycaprolactontriol mit einer Molmasse von 530 g/mol und im Falle der erfindungsgemäßen Massen entsprechend den Beispielen 28 und 29 partielle Umsetzungsprodukte dieses Polycaprolactontriols. Wie aus Tabelle 6 hervorgeht, können durch den Einsatz der Umsetzungsprodukte wesentlich höhere Bruchdehnungswerte bei gleicher Zugfestigkeit bzw. wesentlich höhere Zugfestigkeitswerte bei gleichhoher Bruchdehnung erzielt werden.

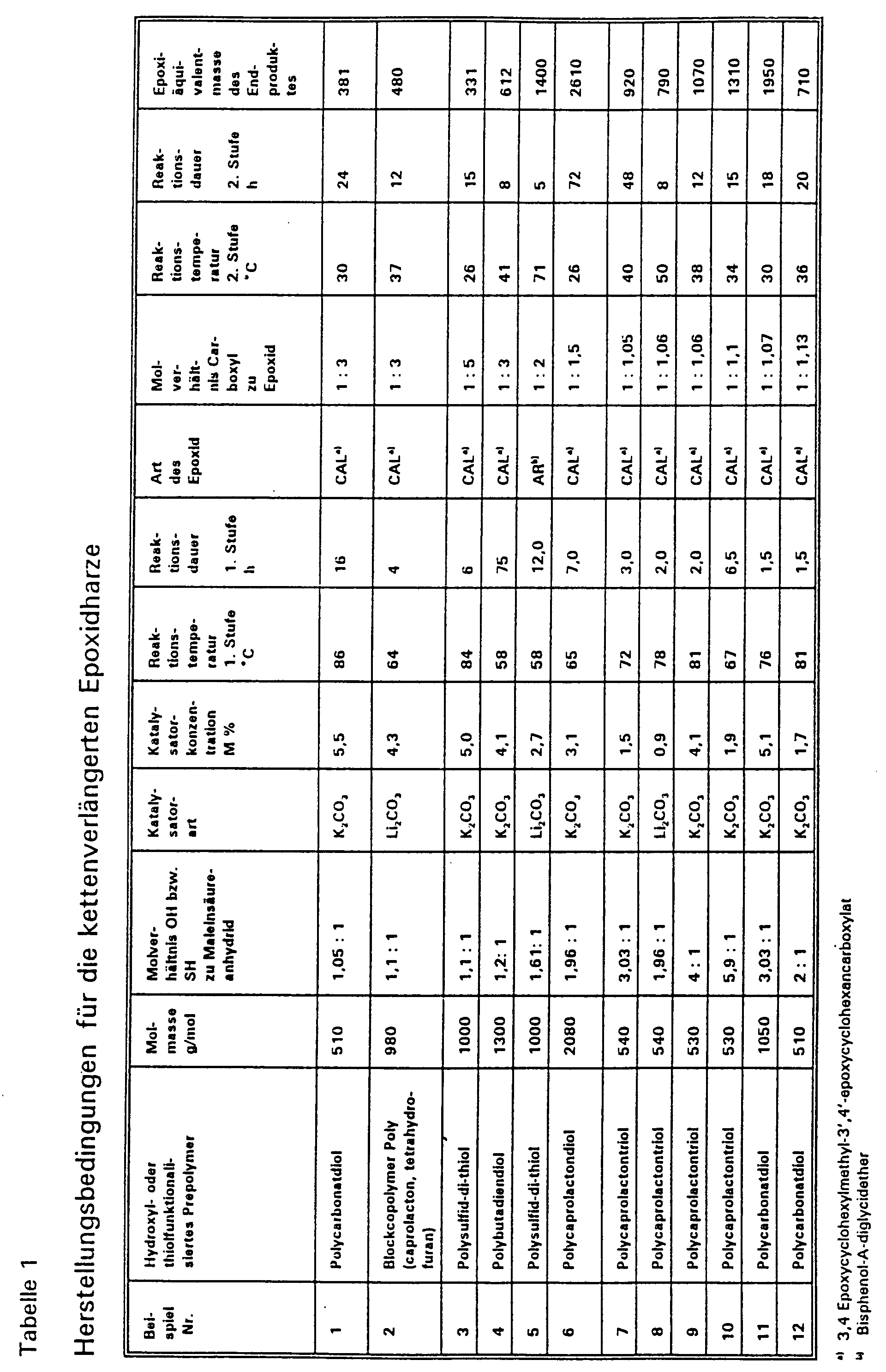

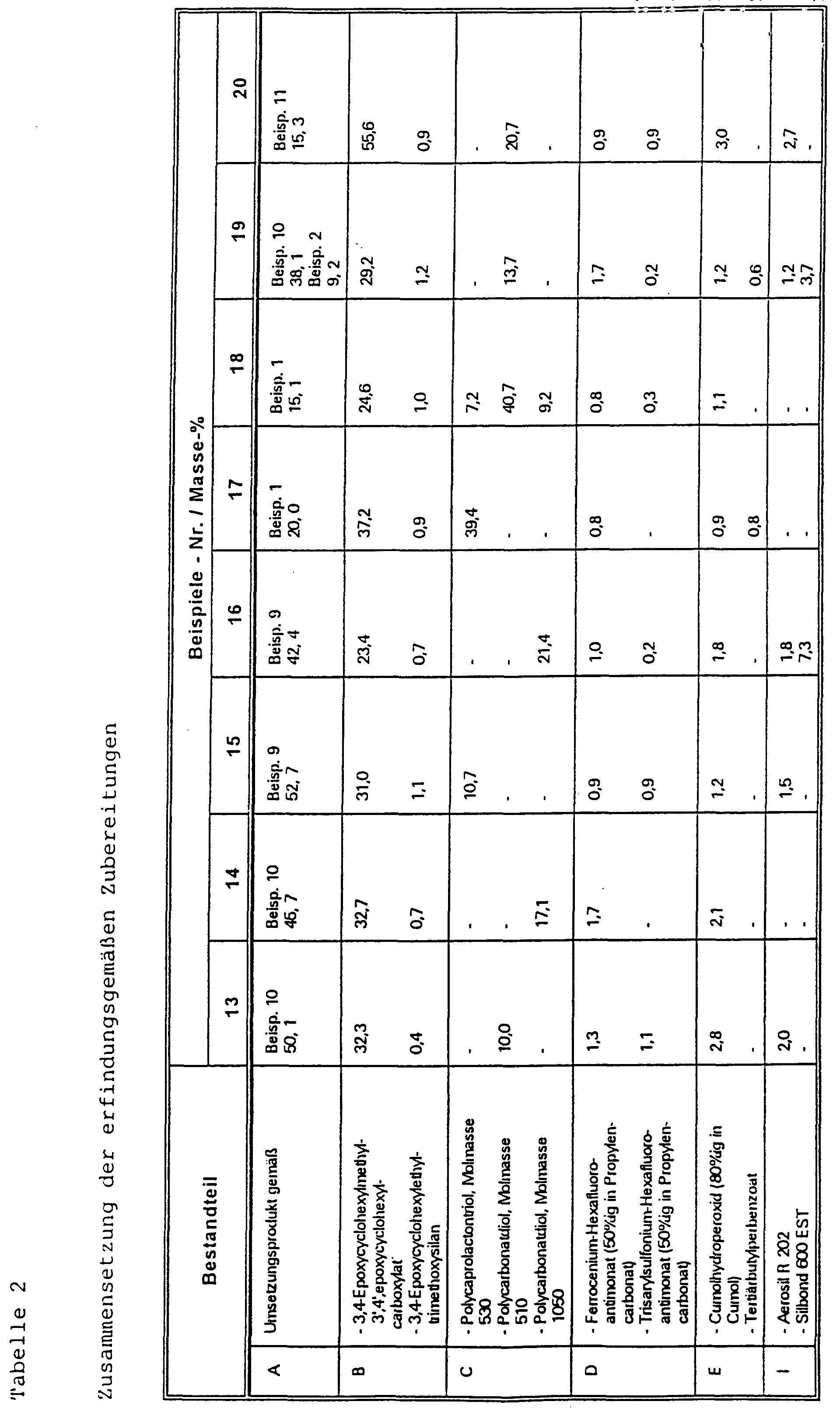

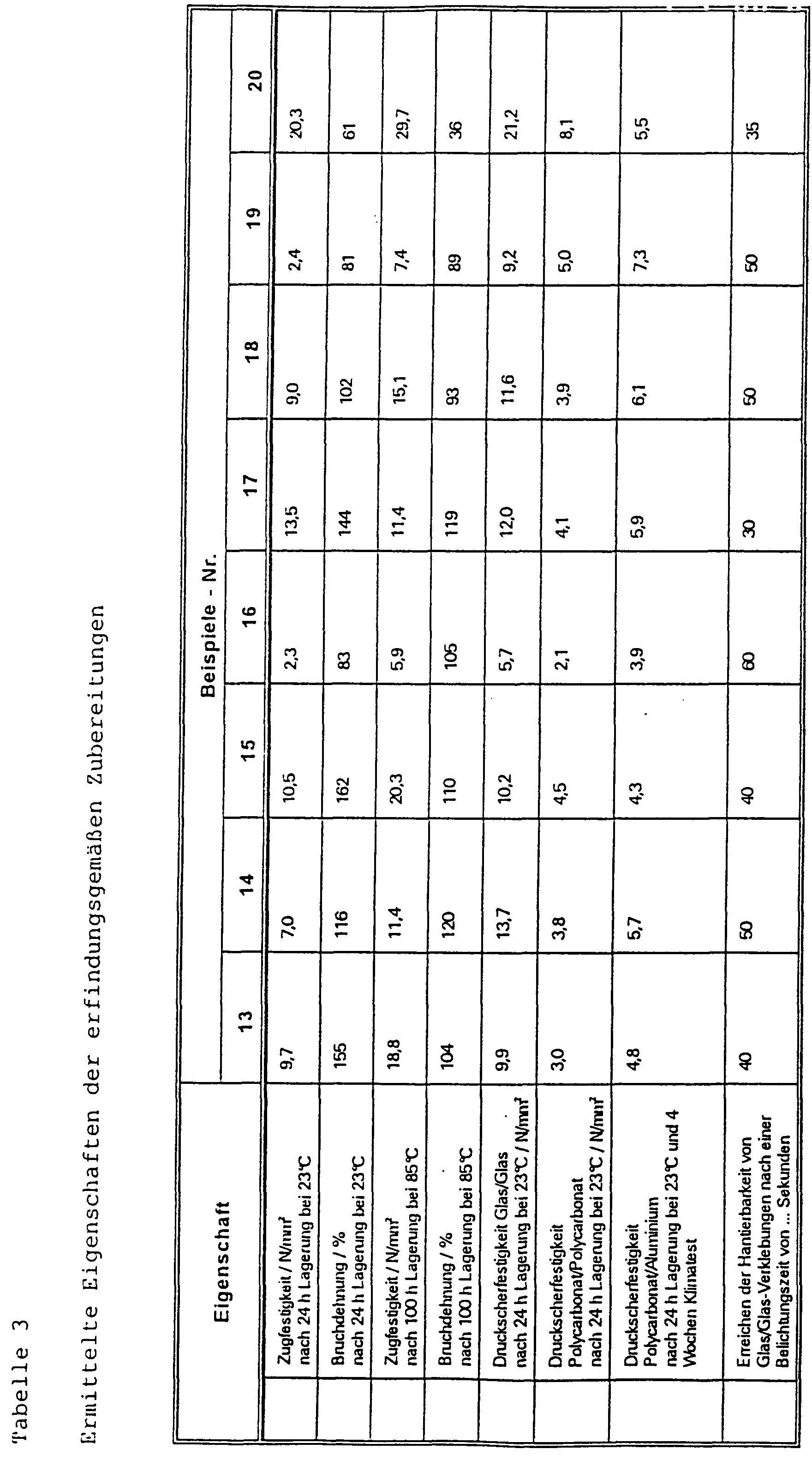

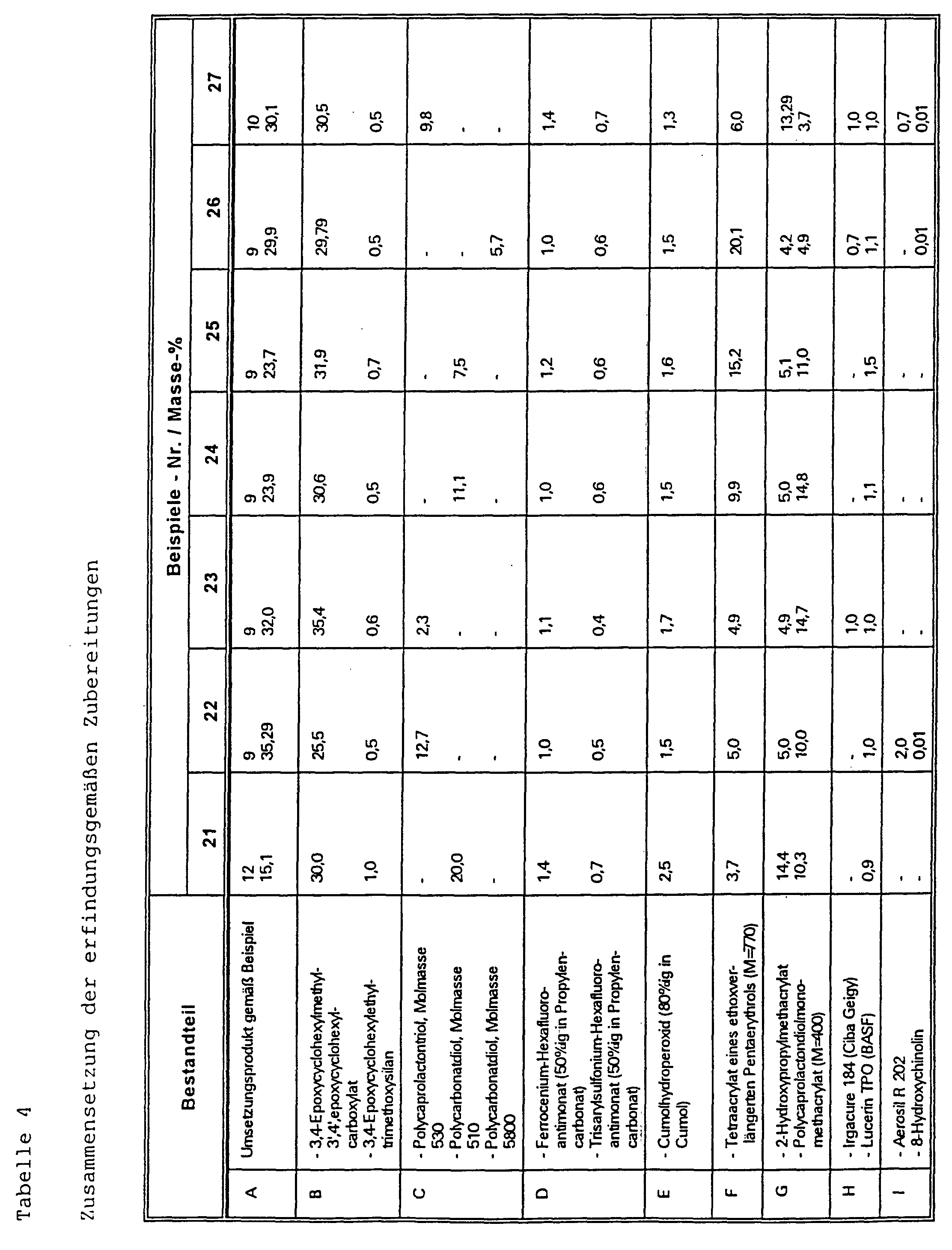

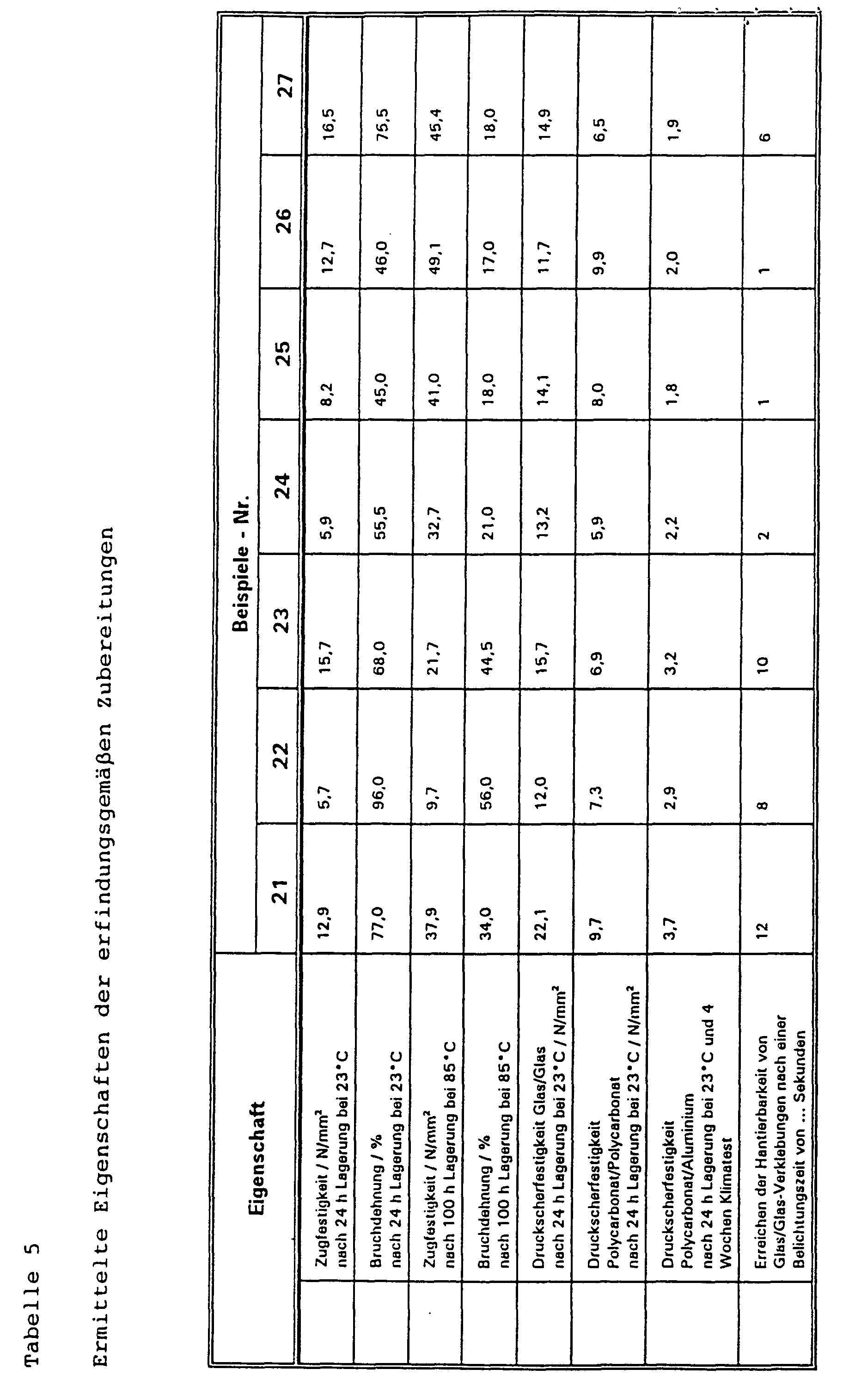

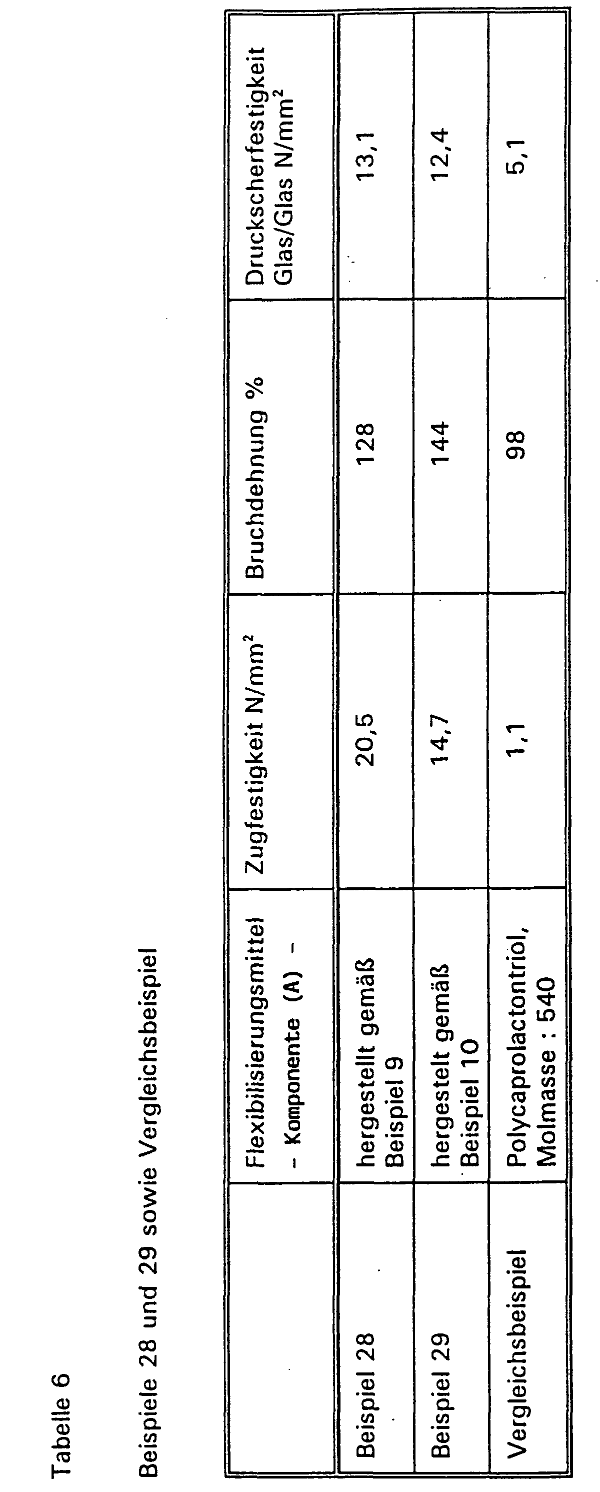

## Patentansprüche

1. Vorwiegend kationisch härtende Masse, die kettenverlängerte Epoxidharze enthält, bestehend aus
(A) 0,1 bis 95 Masseteilen von Produkten einer nur partiellen Umsetzung von Polyolen oder Polythiolen zuerst mit Maleinsäureanhydrid (1. Stufe) und dann mit Epoxyverbindungen (2. Stufe), die mehr als eine Epoxidgruppe im Molekül enthalten, wobei das Molverhältnis Hydroxylgruppen und/oder Thiolgruppen zu Maleinsäureanhydrid in der 1. Stufe 10:1 bis 1,05:1 und das Molverhältnis Carboxylgruppen : Epoxidgruppen in der 2. Stufe 2:1 bis 1:10 beträgt, die Reaktionstemperaturen in beiden Stufen 10 bis < 90°C betragen und die Umsetzungen der 1. und 2. Stufe in Anwesenheit von Katalysatoren erfolgen,
(B) 5 bis 95 Masseteilen von cycloaliphatischen Epoxidharzen,
(C) 0,1 bis 60 Masseteilen von Polyolen, ausgewählt aus der aus Polyesterpolyolen, Polyetherpolyolen, Polycarbonatpolyolen und Polybutadienpolyolen bestehenden Gruppe,
(D) 0,01 bis 5 Masseteilen von Lewis- und/oder Brönstedsäuren und/oder von Verbindungen, die durch Bestrahlung mit Licht einer Wellenlänge von 280 bis 600 nm Lewissäuren oder Brönstedsäuren bilden,
(E) 0 bis 5 Masseteilen von Peroxoverbindungen,
(F) 0 bis 45 Masseteilen von Verbindungen, die mindestens eine (Meth-)acrylatgruppe im Molekül besitzen,
(G) 0 bis 45 Masseteilen von Verbindungen, die mindestens eine (Meth-)acrylatgruppe und zusätzlich mindestens eine Hydroxylgruppe oder mindestens eine Epoxidgruppe im Molekül besitzen,
(H) 0 bis 5 Masseteilen von Verbindungen, die bei Bestrahlung mit Licht einer Wellenlänge von 280 bis 600 nm freie Radikale bilden,
(I) 0 bis 60 Masseteilen von Modifikatoren, ausgewählt aus der Gruppe der Füllstoffe, Farbstoffe, Stabilisatoren, Komplexbildner, Thixotropiermittel und Verdickungsmittel,
wobei die Summe aller Bestandteile 100 Masseteile beträgt.

2. Masse nach Anspruch 1, **gekennzeichnet durch** folgende Zusammensetzung:
- 5 bis 80 Masseteile der Komponente (A),
- 10 bis 70 Masseteile der Komponente (B),
- 5 bis 50 Masseteile der Komponente (C),
- 0,1 bis 4 Masseteile der Komponente (D),
- 0,001 bis 4 Masseteile der Komponente (E),
- 0 bis 45 Masseteile der Komponente (F),
- 0 bis 45 Masseteile der Komponente (G),
- 0 bis 5 Masseteile der Komponente (H),
- 0 bis 60 Masseteile der Komponente (I),
wobei die Summe aller Bestandteile 100 Masseteile beträgt.

3. Masse nach Anspruch 1 oder 2, **dadurch gekennzeichnet, daß** in der Komponente (A) das Molverhältnis Hydroxylgruppen und/oder Thiolgruppen zu Maleinsäureanhydrid in der 1. Stufe 6:1 bis 1,5:1 und das Molverhältnis Carboxylgruppen : Epoxidgruppen in der 2. Stufe 1:1 bis 1:5 beträgt.

4. Masse nach einem der Ansprüche 1 bis 3, **dadurch gekennzeichnet, daß** das cycloaliphatische Epoxidharz der Komponente (B) 3,4-Epoxycyclohexylmethyl-3',4'-epoxycyclohexylcarboxylat ist.

5. Masse nach einem der Ansprüche 1 bis 4, **dadurch gekennzeichnet, daß** die Polyole der Komponente (C) Polycarbonatdiole, Polycaprolactondiole, Polycaprolactontriole und/oder Polybutadiendiole sind.

6. Masse nach einem der Ansprüche 1 bis 5, **dadurch gekennzeichnet, daß** die Säuren oder Verbindungen der Komponente (D) Sulfonium-, Jodonium- und/oder Metalloceniumverbindungen mit einem komplexen Anion geringer Nucleophilie sind.

7. Masse nach einem der Ansprüche 1 bis 6, **dadurch gekennzeichnet, daß** die bei den Umsetzungen zur Komponente (A) anwesenden Katalysatoren Oxide, Hydroxide und/oder Salze von Elementen der 1. und 2. Hauptgruppe des Periodensystems in einer Konzentration von 0,001 bis 10 Gew.-%, bezogen auf das jeweilige Reaktionsgemisch, sind.

8. Masse nach Anspruch 7, **dadurch gekennzeichnet, daß** die Polyole bzw. Polythiole in Komponente (A) Prepolymere mit 2 bis 4 primären OH- bzw. SH-Gruppen sind.

9. Masse nach einem der Ansprüche 1 bis 8, **dadurch gekennzeichnet, daß** ihre Bestandteile auf zwei Teilzubereitungen aufgeteilt sind, wobei die eine Teilzubereitung die Komponenten (A) und (B), die andere Teilzubereitung die Komponenten (C) und (D) enthält und die Gesamtmenge der Komponenten (E), (F), (G), (H), (I) in einer der beiden Teilzubereitung enthalten oder auf beide Teilzubereitungen verteilt ist.

10. Verwendung der Massen gemäß einem der Ansprüche 1 bis 9 für das Verkleben, Vergießen, Abdichten und Beschichten von Substraten.

## Claims

1. A predominantly cationically hardenable composition comprising chain-extended epoxy resins and consisting of
(A) from 0.1 to 95 parts by mass of products of an only partial reaction of polyols or polythiols first with maleic anhydride (1^{st} step) and then with epoxy compounds (2^{nd} step) containing more than one epoxide group per molecule, with the molar ratio of hydroxyl and/or thiol groups to maleic anhydride in the 1^{st} step being from 10 : 1 to 1.05 : 1 and the molar ratio of carboxylic groups to epoxide groups in the 2^{nd} step being from 2 : 1 to 1 : 10, the reaction temperatures in both steps being from 10 to < 90°C, and the reactions of the 1^{st} and 2^{nd} steps taking place in the presence of catalysts,
(B) from 5 to 95 parts by mass of cycloaliphatic epoxy resins,
(C) from 0.1 to 60 parts by mass of polyols selected from the group consisting of polyester polyols, polyether polyols, polycarbonate polyols, and polybutadiene polyols,
(D) from 0.01 to 5 parts by mass of Lewis and/or Bronsted acids and/or of compounds which upon irradiation with light having a wavelength of from 280 to 600 nm form Lewis acids or Bronsted acids,
(E) from 0 to 5 parts by mass of peroxo compounds,
(F) from 0 to 45 parts by mass of compounds having at least one (meth)acrylate group per molecule,
(G) from 0 to 45 parts by mass of compounds having at least one (meth)acrylate group and, additionally, at least one hydroxyl group or at least one epoxide group per molecule,
(H) from 0 to 5 parts by mass of compounds which upon irradiation with light having a wavelength of from 280 to 600 nm form free radicals,
(I) from 0 to 60 parts by mass of modifiers, selected from the group consisting of fillers, dyes, stabilizers, complexing agents, thixotropifying agents, and thickening agents,
with the sum of all constituents amounting to 100 parts by mass.

2. The composition of claim 1 consisting of:
- from 5 to 80 parts by mass of component (A),
- from 10 to 70 parts by mass of component (B),
- from 5 to 50 parts by mass of component (C),
- from 0.1 to 4 parts by mass of component (D),
- from 0.001 to 4 parts by mass of component (E),
- from 0 to 45 parts by mass of component (F),
- from 0 to 45 parts by mass of component (G),
- from 0 to 5 parts by mass of component (H),
- from 0 to 60 parts by mass of component (I),
with the sum of all constituents amounting to 100 parts by mass.

3. The composition of claim 1 or claim 2, **characterized in that** in component (A) said molar ratio of hydroxyl and/or thiol groups to maleic anhydride is from 6 : 1 to 1.5 : 1 in the 1^{st} step and said molar ratio of carboxylic groups to epoxide groups is from 1 : 1 to 1 : 5 in the 2^{nd} step.

4. The composition of any one of claims 1 to 3, **characterized in that** said cycloaliphatic epoxy resin of component (B) is 3,4-epoxycyclohexylmethyl-3',4'-epoxycyclohexylcarboxylate.

5. The composition of any one of claims 1 to 4, **characterized in that** said polyols of component (C) are polycarbonate diols, polycaprolactone diols, polycaprolactone triols, and/or polybutadiene diols.

6. The composition of any one of claims 1 to 5, **characterized in that** said acids or compounds of component (D) are sulfonium, iodonium, and/or metallocenium compounds having a complex anion of low nucleophilicity.

7. The composition of any one of claims 1 to 6, **characterized in that** said catalysts which are present during the reactions to form component (A) are oxides, hydroxides, and/or salts of elements of the first and second main groups of the periodic system, in a concentration of from 0.001 to 10 %, by weight of the respective reaction mixture.

8. The composition of claim 7, **characterized in that** said polyols or polythiols in component (A) are prepolymers having 2 to 4 primary OH- or SH-groups, respectively.

9. The composition of any one of claims 1 to 8, **characterized in that** the constituents of said composition are divided into two partial compositions, with one of said partial compositions comprising components (A) and (B) and the other one of said partial compositions comprising components (C) and (D), respectively, and with the total of components (E), (F), (G), (H), and (I) being contained in either one of the two partial compositions or being distributed over both of them.

10. Use of the compositions according to any one of claims 1 to 9 for bonding, casting, sealing and coating of substrates.

## Revendications

1. Masse durcissant principalement de façon cationique, qui contient des résines époxy prolongées par des chaînes, consistant en :
(A) 0,1 à 95 parties massiques des produits obtenus uniquement à la suite d'une conversion partielle de polyols ou polythiols dans un premier temps à l'aide d'un anhydre de l'acide maléique (1^{ère} étape) et ensuite à l'aide de composés époxy (2^{ème} étape), qui contiennent plus d'un groupe époxy dans la molécule, dans lesquels le rapport molaire des groupes hydroxyles et / ou des groupes thiols par rapport à l'anhydre de l'acide maléique dans la 1^{ère} étape se situe entre 10:1 et 1,05:1 et le rapport molaire des groupes carboxyles par rapport aux groupes époxy dans la 2^{ème} étape se situe entre 2:1 et 1:10, les températures de réaction pour ces deux étapes se situent entre 10 et <90° C et les conversions de la première et de la seconde étape sont réalisées en présence de catalyseurs,
(B) 5 à 95 parties massiques de résines époxy cycloaliphatiques ;
(C) 0,1 à 60 parties massiques de polyols, sélectionnés parmi les groupes de polyols de polyester, de polyols de polyéther, de polyols de polycarbonate et de polyols de polybutadiène existants ;
(D) 0,01 à 5 parties massiques d'acides de Lewis et / ou de Brönsted et/ou de composés, qui génèrent des acides de Lewis ou de Brönsted par exposition à une lumière d'une longueur d'onde de 280 à 600 nm ;
(E) 0 à 5 parties massiques de composés peroxo ;
(F) 0 à 45 parties massiques de composés, qui possèdent au moins un groupe de (méthacrylate) acrylate dans la molécule ;
(G) 0 à 45 parties massiques de composés, qui possèdent au moins un groupe de (méthacrylate) acrylate et en plus au moins un groupe hydroxyle ou au moins un groupe époxy dans la molécule ;
(H) 0 à 5 parties massiques de composés, qui forment des radicaux libres lors d'une exposition à une lumière d'une longueur d'onde de 280 à 600 nm ;
(I) 0 à 60 parties massiques d'agents modificateurs, retenus parmi le groupe des agents de charges, des colorants, des agents de stabilisation, des complexants, des agents de thixotropie et des agents d'épaississement ;
pour lesquelles la somme de tous les composants représentent 100 parties massiques.

2. Masse selon la revendication 1, **caractérisée par** la composition suivante :
- 5 à 80 parties massiques du composant (A)
- 10 à 70 parties massiques du composant (B)
- 5 à 50 parties massiques du composant (C)
- 0,1 à 4 parties massiques du composant (D)
- 0,001 à 4 parties massiques du composant (E)
- 0 à 45 parties massiques du composant (F)
- 0 à 45 parties massiques du composant (G)
- 0 à 5 parties massiques du composant (H)
- 0 à 60 parties massiques du composant (I)
pour laquelle la somme de tous les composants représente 100 parties massiques.

3. Masse selon la revendication 1 ou 2, **caractérisée en ce que** le rapport molaire des groupes d'hydroxyles et / ou des groupes de thiols par rapport à l'anhydre d'acide maléique dans le composant (A) dans la 1^{ère} étape se situe entre 6:1 et 1,5:1 et le rapport molaire des groupes carboxyles par rapport aux groupes époxy dans la 2^{ème} étape se situe entre 1:1 et 1:5.

4. Masse selon l'une quelconque des revendications 1 à 3, **caractérisée en ce que** la résine époxy cycloaliphatique des composants (B) est du 3,4-époxycyclohexylméthyl-3', 4'-époxycyclohexylcarboxylate.

5. Masse selon l'une quelconque des revendications 1 à 4, **caractérisée en ce que** les polyols du composant (C) sont des diols de polycarbonate, des diols de polycaprolactone et / ou des diols de polybutadiène.

6. Masse selon l'une quelconque des revendications 1 à 5, **caractérisée en ce que** les acides ou composés du composant (D) sont des composés de sulfonium, d'iodonium et/ou de métallocénium avec un anion complexe de faible nucléophile.

7. Masse selon l'une quelconque des revendications 1 à 6, **caractérisée en ce que** les catalyseurs présents lors des conversions pour le composant (A) sont des oxydes, des hydroxydes et / ou des sels des éléments des premiers et deuxièmes groupes principaux du système périodique dans une concentration de 0,001 à 10 % massique, en fonction du mélange réactif.

8. Masse selon la revendication 7, **caractérisée en ce que** les polyols ou les polythiols dans le composant (A) sont des prépolymères avec 2 à 4 groupes OH ou SH primaires.

9. Masse selon l'une quelconque des revendications 1 à 8, **caractérisée en ce que** les composants sont répartis en deux préparations partielles, pour lesquelles l'une des préparations partielles contient les composants (A) et (B) et l'autre préparation partielle comprend les composants (C) et (D) et la quantité totale des composants (E), (F), (G), (H), (I) est contenue dans l'une des deux préparations partielles ou est répartie sur les deux.

10. Utilisation des masses selon l'une quelconque des revendications 1 à 9 pour le collage, le scellement, l'étanchéité et l'enduit de substrats.
